# EUROPEAN PATENT APPLICATION

(11) **EP 4 787 694 A1**
(43) Date of publication of application: **05.08.2026**
(21) Application number: 25155687.4
(22) Date of filing: 04.02.2025
(51) Int. Cl.: H02M 1/14, H02M 3/335, H02M 1/00, H02M 1/34

(54) **FLYBACK TOPOLOGY WITH AUXILIARY PRIMARY SIDE REFERENCED FLYBACK/FORWARD BUFFER FOR OUTPUT CURRENT SMOOTHING AND SENSING**

(71) Applicant: Tridonic GmbH & Co. KG, 6851 Dornbirn (AT)
(72) Inventor: Romano, Fabio, 6851 Dornbirn (AT); Schneider, Miguel Philipp, 6851 Dornbirn (AT)
(74) Representative: Rupp, Christian

(57) **Abstract**

The present invention provides a flyback power converter, the flyback power converter comprises: a transformer having a primary winding connected to an input supply and a secondary winding for supplying power to a load, a first switch arranged in series with the primary winding and configured to conduct current through the primary winding during an on-time and interrupt current flow during an off-time, an output circuit coupled to the secondary winding for powering the load; and an auxiliary circuit configured to be active during an off-time of the first switch. In a first phase of the off-time of the first switch, the auxiliary circuit is configured to absorb energy from the transformer; and in a second phase of the off-time of the first switch, the auxiliary circuit is configured to deliver at least part of the absorbed energy to the output circuit.

## Description

### TECHNICAL FIELD

The present invention relates generally to switched-mode power supplies and, more particularly, to flyback converters used for providing power to a load, such as in LED lighting systems, battery chargers, or other applications requiring a compact and efficient conversion topology.

### BACKGROUND

Flyback converters are widely used in switched-mode power supplies and LED drivers, due to their simplicity and cost-effectiveness. In a basic flyback converter, energy is transferred from the primary winding of a transformer to an output circuit during the off-time of a primary-side switch. While this topology is advantageous in many respects, it can exhibit certain drawbacks in practice.

One common challenge arises when the primary-side switch is turned off, causing energy to be rapidly released into the secondary winding of the transformer. Due to the turns ratio of the transformer, this energy release can result in high secondary currents, often exhibiting the characteristic triangular waveform typical of flyback converters. This rapid energy release may also produce a high transient or "current spike" in the secondary circuit. Such spikes can stress output components (e.g., diodes and capacitors), cause increased electromagnetic interference (EMI), and generate unwanted ripple or flicker in the load, especially in lighting or sensitive electronic applications. Various approaches have been proposed to mitigate these issues, such as adding additional snubber components, using larger output capacitors, or employing more complex control schemes; however, these often increase cost, board space, or component count.

Moreover, providing reliable and accurate feedback from the secondary side can require galvanic isolation techniques, such as optocouplers, which add further complexity to the converter design. Designers typically must balance performance, cost, and reliability constraints when implementing flyback converters in commercial products. Consequently, there remains a demand for improved flyback topologies that address output current spikes and enable more efficient operation without unduly increasing system cost or complexity.

### SUMMARY

In view of the above-discussed challenges, this invention introduces an improved flyback topology. One objective is to reduce the transient output current spike that typically occurs during the off-time of the primary-side switch. In particular, the aim is to achieve a substantially constant output current without substantially increasing system complexity or cost. By addressing this issue, the invention seeks to improve overall efficiency, reduce stress on output components, and enable simpler integration of feedback and control functionalities in flyback converter designs.

These and other objectives are achieved by the solution of this disclosure as described in the independent claims. Advantageous implementations are further defined in the dependent claims.

According to a first aspect of the invention, a flyback power converter, is provided. The flyback power converter comprises: a transformer having a primary winding connected to an input supply and a secondary winding for supplying power to a load, a first switch arranged in series with the primary winding and configured to conduct current through the primary winding during an on-time and interrupt current flow during an off-time, an output circuit coupled to the secondary winding for powering the load; and an auxiliary circuit configured to be active during an off-time of the first switch. In a first phase of the off-time of the first switch, the auxiliary circuit is configured to absorb energy from the transformer; and in a second phase of the off-time of the first switch, the auxiliary circuit is configured to deliver at least part of the absorbed energy to the output circuit.

The present invention proposes an improved flyback power converter designed to reduce output current spikes and provide a more stable output current during operation. The invention achieves this by incorporating a primary-side auxiliary circuit, which operates during the off-time of the primary-side switch. The auxiliary circuit absorbs energy from the transformer in a first phase and delivers at least part of the absorbed energy to the output circuit in a second phase, thereby mitigating current spikes and enhancing efficiency.

In an implementation of the first aspect, the auxiliary circuit is galvanically isolated from the output circuit and is referenced to a primary-side ground potential.

This configuration reduces design complexity and cost, as there is no need for additional isolation components. It simplifies control circuit design since signals can be processed on the primary side without requiring optocouplers or transformers for feedback.

In an implementation of the first aspect, the auxiliary circuit comprises: an auxiliary winding coupled to the primary winding of the transformer; an energy storage component connected to the auxiliary winding, configured to receive energy from the auxiliary winding and discharge the received energy into the output circuit; and a second switch arranged in series with the auxiliary winding, the second switch being configured to conduct selectively during the off-time of the first switch.

In an implementation of the first aspect, the energy storage component is a buffer capacitor, optionally a ceramic capacitor.

This design takes advantage of higher primary-side voltages, allowing the capacitor to be smaller while still storing sufficient energy. For instance, a ceramic capacitor can be used instead of an electrolytic capacitor, this reduces reliance on electrolytic capacitors, increasing reliability and lifespan.

In an implementation of the first aspect, the flyback power converter further comprises a control circuit arranged on the primary side and configured to drive the first switch and the second switch in an alternating manner.

The control circuit ensures proper timing and synchronization between the primary and auxiliary circuits, avoids simultaneous conduction, preventing energy losses and improving efficiency. In particular, the first switch and the second switch is alternatively conducted with an appropriate dead time, preventing overlap in their operation. This configuration also simplifies implementation since the control circuit remains on the primary side.

In an implementation of the first aspect, the control circuit is configured to: sense a first current through the first switch and a second current through the second switch; and estimate an output current of the output circuit based on sensed first current and second current.

The ability to estimate the output current eliminates the need for secondary-side current sensing, reducing cost and complexity. It enhances efficiency by enabling real-time adjustments based on primary-side measurements.

In an implementation of the first aspect, the control circuit is configured to: sense a voltage across the energy storage component in the auxiliary circuit; and estimate an output voltage of the output circuit based on the sensed voltage.

The control circuit may sense the voltage across the energy storage capacitor in the auxiliary circuit and estimates the output voltage using the known transformer winding ratio. It eliminates the need for optocoupler-based feedback, simplifying circuit design. This design also reduces component count, lowering manufacturing costs and increasing reliability.

According to a second aspect of the invention, a system comprising a flyback power converter as described in the first aspect or any of the implementations of the first aspect, is provided. The system further comprises an LED-based load supplied directly or by means of a further converter stage of the system, by said power converter.

The proposed system smooths LED drive current, improving efficiency and extending LED lifespan. It may minimizes flicker and ripple, ensuring high-quality illumination. It also enables a cost-effective and efficient LED driver design using primary-side control. The solution can be implemented in various LED systems, from small-scale residential lighting to larger industrial installations.

According to a third aspect of the invention, a method for operating a flyback power converter as described in the first aspect or any of the implementations of the first aspect, is provided. The method comprises: conducting current through the primary winding of the transformer during an on-time of the first switch, thereby storing energy in the transformer; interrupting the current through the primary winding by turning off the first switch, thereby initiating an off-time and inducing energy transfer from the transformer to an output circuit; activating an auxiliary circuit during the off-time of the first switch, wherein during a first phase of the off-time, the auxiliary circuit absorbs energy from the transformer and stores at least a portion of the absorbed energy, and during a second phase of the off-time, the auxiliary circuit transfers at least part of the stored energy from the auxiliary circuit to the output circuit; and repeating the previous steps in a switching cycle to regulate power delivery to the load.

By incorporating a two-phase energy transfer, the method mitigates the high current spikes that typically occur when the primary-side switch turns off in a conventional flyback converter. The staggered energy transfer process enables a rectangular current profile at the output, making it ideal for applications such as LED drivers where a steady current supply is required.

All steps that are performed by the various components described in this application, as well as the functionalities described to be performed by the various components, are intended to mean that the respective component is adapted to or configured to perform the respective steps and functionalities. Even if, in the following description of specific embodiments, a specific functionality or step to be performed by external components is not reflected in the description of a specific detailed element of that component that performs that specific step or functionality, it should be clear to a skilled person that these methods and functionalities can be implemented in respective software or hardware elements, or any kind of combination thereof.

### BRIEF DESCRIPTION OF DRAWINGS

The above-described aspects and implementation forms are now further explained with respect to the drawings by way of example only, and not for limitation. In the drawings:
- Figure 1: shows an exemplary flyback power converter according to an embodiment of this invention.
- Figure 2: shows (a) operation phases and (b) exemplary waveforms of the proposed flyback power converter.
- Figure 3: shows on-time regulation of the flyback power converter according to an embodiment of this invention.
- Figure 4: shows peak current regulation of the flyback power converter according to an embodiment of this invention.
- Figure 5: shows simulation results of the flyback power converter according to an embodiment of this invention.
- Figure 6: shows measurement results of the flyback power converter according to an embodiment of this invention.
- Figure 7: shows a method according to an embodiment of this invention.

### DETAILED DESCRIPTION OF EMBODIMENTS

Illustrative embodiments of a flyback power converter, a system, and a corresponding method are described with reference to the figures. Although this description provides a detailed example of possible implementations, it should be noted that the details are intended to be exemplary and in no way limit the scope of the application. An embodiment/example may refer to other embodiments/examples. For example, any description including but not limited to terminology, element, process, explanation, and/or technical advantage mentioned in one embodiment/example is applicable to the other embodiments/examples. The same elements are labeled with the same reference signs and may function similarly or likewise.

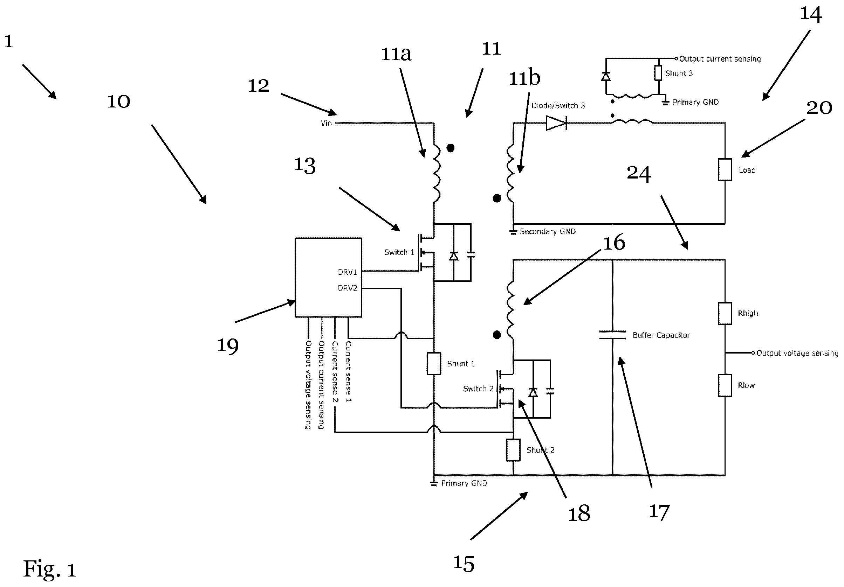

Figure 1 shows an embodiment of a flyback power converter 10. The converter 10 comprises:
- A transformer 11 having a primary winding 11a connected to an input supply 12 and a secondary winding 11b coupled to an output circuit 14 that powers a load 20.
- A first switch 13 in series with the primary winding 11a, which is periodically switched on and off to control energy transfer.
- An auxiliary circuit 15 that is active during the off-time of the first switch 13, configured to: absorb energy in a first phase, and deliver energy to the output circuit 14 in a second phase.

The auxiliary circuit 15 is designed to assist in energy transfer and reduce output current fluctuations.

In one embodiment, the auxiliary circuit 15 includes:
- An auxiliary winding 16 coupled to the primary winding 11a of the transformer 11.
- An energy storage component 17 (e.g., a buffer capacitor), configured to receive and store energy.
- A second switch 18, which operates selectively during the off-time of the first switch 13.

The energy storage component 17 is configured to receive energy from the auxiliary winding 16 and discharge the received energy into the output circuit 14.

The auxiliary circuit 15 is galvanically isolated from the output circuit 14 and referenced to the primary-side ground potential, ensuring simplified control and feedback without requiring secondary-side components such as optocouplers.

The flyback power converter 10 may also comprises a control circuit 19 configured to regulate the operation of the first switch 13 and the auxiliary circuit 15.

The control circuit 30 is configured to drive both the first switch 13 and the second switch 18 in an alternating manner. The control circuit 19 may sense current through the first switch 13 and the second switch 18 to estimate output current without requiring secondary-side feedback. The control circuit 19 may sense the voltage across the buffer capacitor 17 to estimate the output voltage.

Referring to Figure 1, the flyback power converter 10 may further comprise a current-sensing resistor (Shunt 1) connected in series with the first switch 13 and a current-sensing resistor (Shunt 2) connected in series with the second switch 18.

Possibly, the flyback power converter 10 may further comprise an output voltage sensing circuit connected in parallel with the buffer capacitor 17. The output voltage sensing circuit may be a voltage divider comprising two resistors (Rhigh and Rlow).

The control circuit 19 ensures alternate conduction of the first switch 13 and second switch 18 with an appropriate dead time, preventing overlap in their operation.

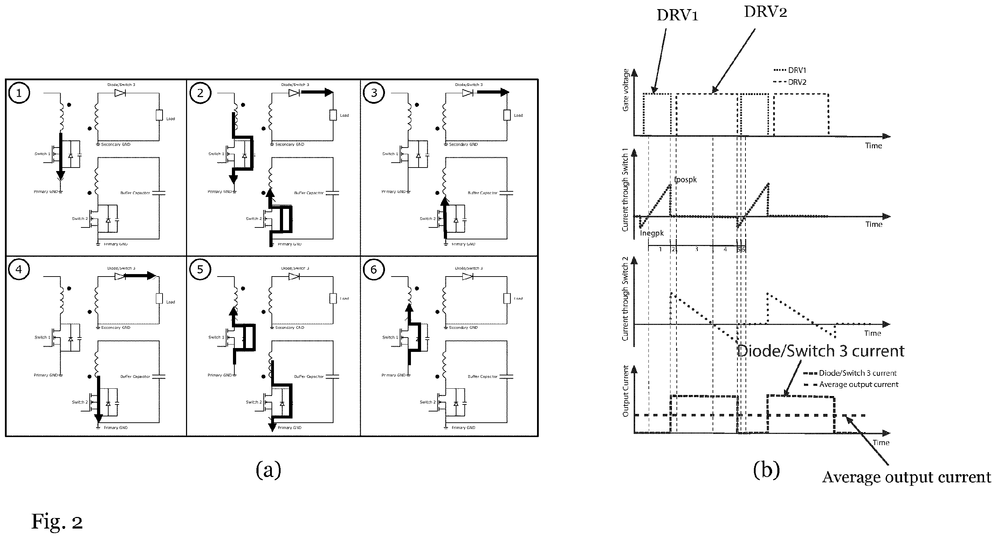

Figure 2 demonstrates the operation stages of the flyback power converter 10.

Referring to Figure 2(a), the flyback power converter 10 operates through six distinct stages, each contributing to the controlled transfer of energy from the primary side to the output circuit 14. The invention improves upon conventional flyback topologies by introducing an auxiliary circuit 15, which ensures a more uniform and stable output current by splitting the energy transfer into two phases during the off-time of the first switch 13. This method effectively reduces current spikes and enhances efficiency.

In the first stage of operation, the first switch 13 is turned on, allowing current to flow through the primary winding 11a of the transformer 11. During this interval, the transformer 11 stores energy in its magnetic core, and the secondary diode (diode/switch 3) in the output circuit 14 is reverse-biased, preventing energy transfer to the load 20. Simultaneously, the second switch 18 remains off, ensuring that no energy is directed to the auxiliary circuit 15. This phase constitutes the energy storage phase, where the magnetic field of the transformer 11 accumulates energy in preparation for delivery to the output circuit 14.

As the cycle progresses to the second stage, the first switch 13 turns off, interrupting current flow through the primary winding 11a, and initiating energy transfer from the transformer 11. At this moment, the secondary diode/switch 3 becomes forward-biased, allowing energy to be delivered to the load 20. The second switch 18 remains off in this stage. However, the body diode of the second switch 18 also becomes forward biased, allowing energy to be delivered/absorbed to the buffer capacitor 17 even the second switch 18 is turned-off. It should be understood that in this stage, the absorption of the "current spike" already starts.

In the third stage, the second switch 18 turns on, enabling the auxiliary winding 16 to absorb a portion of the demagnetization energy from the transformer 11. This absorption phase (the first operation phase of the second switch) significantly reduces the instantaneous energy transfer to the secondary side, thereby minimizing the sharp current spikes typically observed in conventional flyback designs. During this phase, the auxiliary circuit 15 stores energy in the buffer capacitor 17, effectively delaying its release to the output circuit 14.

In the fourth stage, the second switch 18 remains on. The auxiliary circuit 15 begins transferring the stored energy to the output circuit 14. The stored charge in the buffer capacitor 17 discharges through the secondary diode/switch 3, supplementing the energy delivered from the transformer 11. This controlled secondary-phase transfer extends the duration of energy delivery, contributing to a more consistent and regulated output current. The first switch 13 remains off during this stage, allowing the auxiliary circuit 15 to complete its function without interference.

In the fifth stage, the second switch 18 turns off, and the first switch 13 remains off. The fifth phase represents a transition stage in which the primary winding 11a is fully demagnetized. At this point, the secondary diode/switch 3 ceases conduction, momentarily suspending energy delivery to the output circuit 14. Both the first switch 13 and the second switch 18 remain off, ensuring a brief dead-time period that facilitates a smooth transition between cycles.

During the sixth stage, the body diode of the first switch 13 is still turned on due to the negative current flow, which is a result of the "negative transformer magnetization" of the fourth stage. This negative current flow is essential to charge the FET capacitance and achieve zero voltage switching (ZVS).

After the sixth and final stage, the first switch 13 is turned on again, marking the beginning of a new cycle.

The accompanying waveforms in Figure 2(b) illustrate the timing relationships between the gate drive signals for the first switch 13 (DRV1) and the second switch 18 (DRV2), the currents flowing through each switch, and the resultant output current. The gate drive signals (DRV1 and DRV2) depict alternating conduction periods, with short dead-times between switching events. The current through Switch 1 (13) follows a characteristic triangular profile, peaking during the energy storage phase and dropping to zero when the switch turns off. The current through Switch 2 (18) exhibits a complementary profile, increasing as energy is absorbed into the auxiliary circuit 15 and decreasing as energy is transferred to the output 14. As a result, a substantially constant output current can be achieved.

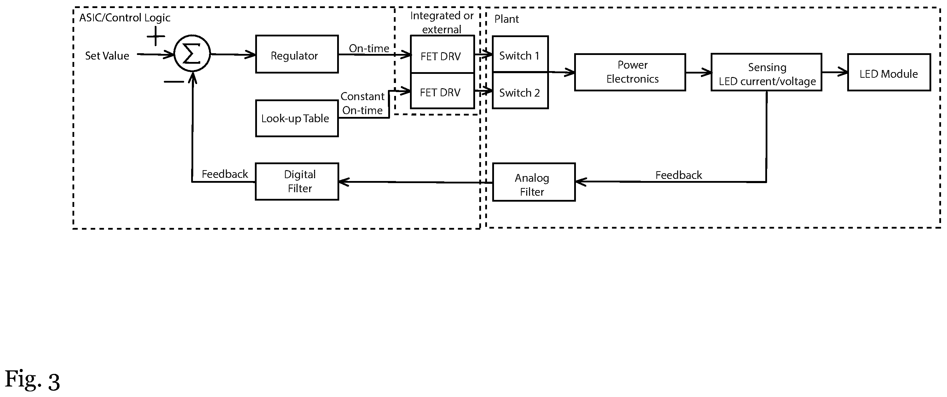

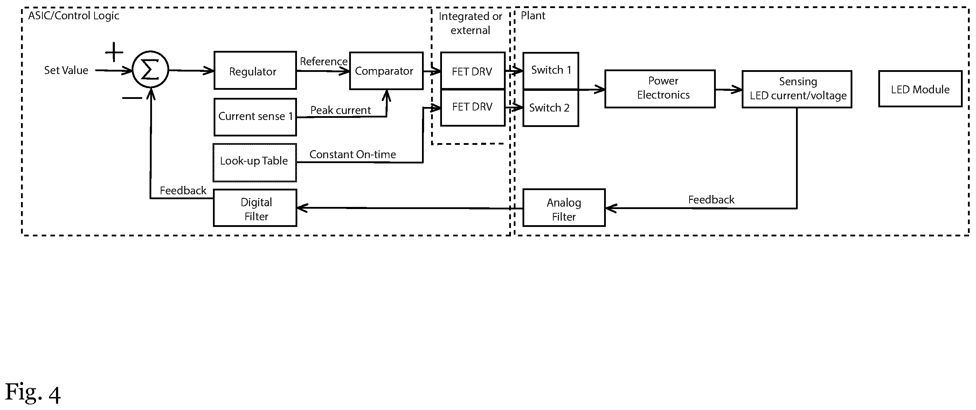

Figures 3 and 4 illustrate two different regulation procedures applied to the proposed flyback power converter 10, each focusing on the control of the switching elements to regulate the output current effectively. Both figures describe the interaction between the control logic and the power stage (plant), detailing how on-time regulation and peak current regulation contribute to stable and efficient power conversion for driving an LED module 20. The proposed flyback converter 10, which incorporates an auxiliary circuit 15, benefits from these control techniques, as they optimize energy transfer while ensuring a consistent output current.

In Figure 3, an on-time regulation method is depicted. This technique determines the duration for which the first switch 13 remains on during each switching cycle. The control system comprises an ASIC/control logic block, which processes a set value representing the desired output current and compares it with real-time feedback signals obtained from the output circuit 14. A regulator generates the required on-time value based on this comparison. Additionally, a look-up table stores pre-calculated on-time values that can be used under specific operating conditions to ensure stability. The FET drivers, which may be either integrated or external, then apply the calculated on-time to switch 1 (the first switch 13) and switch 2 (the second switch 18), ensuring controlled energy delivery. The power electronics stage, including the flyback transformer 11, processes this energy, while a sensing circuit continuously monitors the LED output current and voltage. This feedback loop, processed through a digital filter, ensures that the system dynamically adjusts the on-time, maintaining a stable output current suitable for LED applications.

While on-time regulation operates by controlling switching duration, Figure 4 introduces a peak current regulation procedure, which instead controls the maximum current allowed in each switching cycle. In this approach, the ASIC/control logic block still receives the set value and feedback signals but, instead of calculating a precise on-time, it defines a peak current threshold that should not be exceeded. The current sense circuit monitors the real-time current through switch 1, providing input to a comparator. This comparator continuously compares the actual current value with a reference current level generated by the regulator. Once the sensed current reaches this reference level, the comparator signals the FET driver to turn off switch 1, ensuring that the peak current is limited per switching cycle. Meanwhile, switch 2 operates in coordination with switch 1, further smoothing the output current waveform. The feedback loop, processed through a digital filter, refines the regulation process, ensuring precise current control and output stability.

Both on-time regulation (Figure 3) and peak current regulation (Figure 4) contribute to enhancing the performance of the flyback power converter 10, particularly in applications where consistent LED current is essential. On-time regulation offers straightforward implementation by controlling the duration of energy transfer, while peak current regulation provides fast response to load variations and prevents current overshoot. The choice between these methods depends on design constraints and performance requirements, with both techniques ensuring that the auxiliary circuit 15 effectively distributes energy, ultimately resulting in improved efficiency, reduced ripple, and extended LED lifespan.

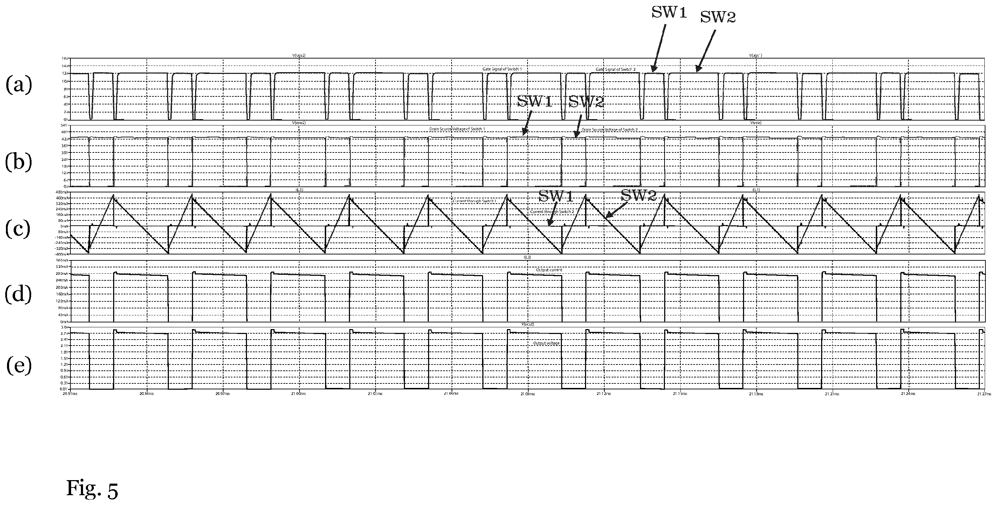

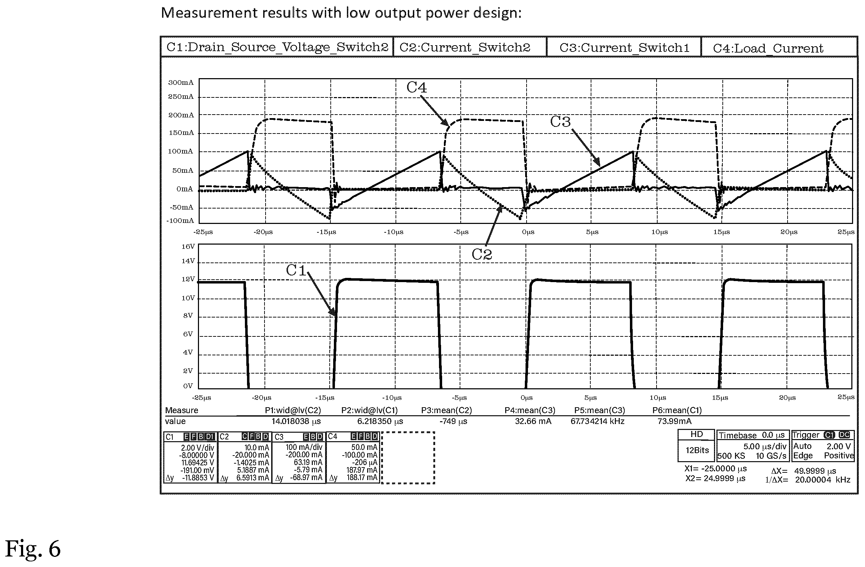

Figures 5 and 6 present the simulation results and real measurement results, respectively, for the proposed flyback power converter 10 with the auxiliary circuit 15. These figures illustrate the switching behavior, current waveforms, and voltage characteristics under operating conditions with low output power. The results validate the functional operation and performance advantages of the proposed converter.

Figure 5 presents the waveforms obtained from a circuit simulation of the proposed flyback power converter 10.

Figure 5(a) shows the gate drive signals for Switch 1 and Switch 2. This confirms that Switch 1 and Switch 2 operate in an alternating manner, ensuring that they never conduct simultaneously. This alternation is a crucial feature of the proposed converter, as it allows energy to be efficiently transferred in two phases, mitigating output current ripple.

Figure 5(b) shows the drain-to-source voltages of Switch 1 and Switch 2, showing the switching transitions. The drain-to-source voltage of Switch 1 exhibits the expected switching transitions, where the voltage rises when the switch turns off and drops to near zero when the switch turns on.

Figure 5(c) shows the current waveforms of Switch 1 and Switch 2. The triangular current waveforms of Switch 1 and Switch 2 highlight the controlled energy transfer process.

Figure 5(d) shows the output current waveform, which remains relatively constant, confirming the intended operation of the auxiliary circuit in smoothing the current supplied to the load. Unlike conventional flyback converters, where output current exhibits noticeable peaks, this implementation achieves a more rectangular output current waveform, validating the effectiveness of the Rectangular Output Current (ROC) Flyback topology.

Figure 5(e) shows the output voltage, which remains stable over time, demonstrating that the converter maintains consistent voltage regulation. The absence of excessive oscillations or transients confirms that the control method effectively manages energy transfer and feedback stabilization.

Figure 6 presents experimental measurement results obtained from a low-power prototype of the proposed converter 10.

The waveforms include:
- Drain-to-source voltage of Switch 2 (C1).
- Current through Switch 2 (C2).
- Current through Switch 1 (C3).
- Load current (C4).

The drain-to-source voltage of Switch 2 confirms the alternating switching pattern, consistent with the simulation results in Figure 5. This waveform shows clear switching transitions, indicating that Switch 2 is effectively controlled to facilitate two-phase energy transfer.

The current through Switch 1 and Switch 2 further validates the simulation data. The C3 waveform (Switch 1 current) follows the expected triangular waveform, with a sharp increase during the on-time and a rapid drop when the switch turns off. The C2 waveform (Switch 2 current) confirms that Switch 2 operates in the second phase, taking over energy delivery once Switch 1 completes its demagnetization cycle.

The load current waveform (C4) remains nearly constant, demonstrating that the auxiliary circuit 15 significantly reduces output current ripple.

This measurement result confirms that the proposed flyback converter 10 achieves stable current regulation, making it particularly suited for LED applications, where precise current control is crucial for minimizing flicker and extending LED lifespan.

Both simulation (Figure 5) and experimental (Figure 6) results demonstrate consistent behavior, confirming the effectiveness of the proposed flyback topology. The observed stable output current, efficient energy transfer, and well-regulated switching waveforms demonstrate that the ROC Flyback topology with the auxiliary circuit 15 provides significant improvements over conventional designs. This design ensures enhanced LED performance, improved energy efficiency, and reduced EMI, making it particularly suitable for precision current regulation applications, such as LED drivers.

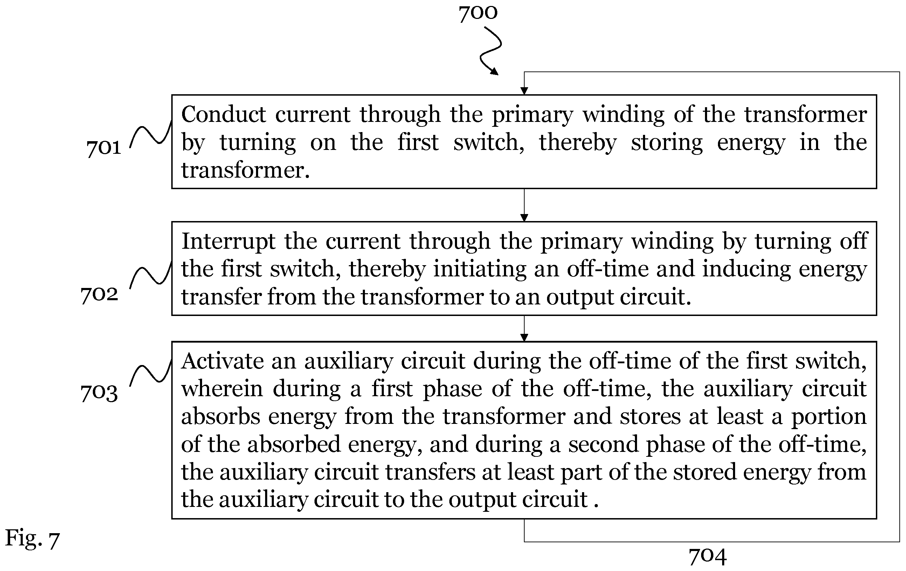

Figure 7 illustrates the method 700 for operating the flyback power converter 10 according to this invention. The method consists of a sequence of steps that define the switching behavior of the converter and the interaction between the first switch 13, the transformer 11, the auxiliary circuit 15, and the output circuit 14. The method enables efficient energy transfer while reducing current spikes and improving output stability, particularly in applications such as LED drivers where a constant current supply is essential.

In step 701, the first switch 13 is turned on, allowing current to flow through the primary winding 11a of the transformer 11. During this period, the magnetic core of the transformer 11 stores energy, which will later be transferred to the output circuit 14. The on-time of switch 13 determines the amount of energy stored, which depends on factors such as input voltage, output requirements, and control logic settings. Since the auxiliary circuit 15 remains inactive during this phase, all the energy is contained within the transformer's magnetic field.

In step 702, the first switch 13 turns off, interrupting the primary current and causing the transformer 11 to release stored energy. This initiates the off-time, during which energy must be efficiently transferred to the output circuit 14. The demagnetization of the transformer's core induces a voltage across the secondary winding 11b, allowing current to flow to the load 20 through the output rectifier. At this stage, a significant innovation of the proposed method is introduced: the auxiliary circuit 15 is activated, leading to a controlled two-phase energy transfer.

Step 703 describes the operation of the auxiliary circuit 15 during the off-time of the first switch 13. This step consists of two distinct phases:
In the first phase, the auxiliary circuit 15 absorbs energy from the transformer 11, thereby reducing the initial peak current that would otherwise be directly transferred to the output circuit 14. This controlled absorption prevents the sudden surge of current that is typically observed in conventional flyback converters when the first switch 13 turns off.

In the second phase, the auxiliary circuit 15 releases the stored energy into the output circuit 14, ensuring a more gradual and stable energy transfer. This process extends the duration of current delivery to the output circuit, resulting in a more constant output current, which is particularly beneficial for applications requiring low-ripple power delivery.

Finally, in step 704, the method repeats steps 701 to 703 continuously, forming a switching cycle that regulates power delivery to the load 20. This iterative process ensures that each cycle achieves optimal energy transfer, leveraging the alternating operation of the auxiliary circuit 15 to smooth the output current while maintaining high efficiency.

By incorporating a two-phase energy transfer, the method mitigates the high current spikes that typically occur when the first switch 13 turns off in a conventional flyback converter. The staggered energy transfer process enables a rectangular current profile at the output, making it ideal for applications such as LED drivers where a steady current supply is required. By reusing energy through the auxiliary circuit 15, the method minimizes energy dissipation, leading to a higher overall efficiency in power conversion.

The method can be implemented using primary-side control, eliminating the need for secondary-side feedback components such as optocouplers, thereby reducing system complexity and cost. The method can also be adapted to various power levels and different switching frequencies, making it suitable for multiple power applications beyond LED drivers.

To summarize, the invention provides significant advantages over conventional flyback converters, including:
- Reduction of current spikes at the output, leading to a more stable and near-constant output current.
- Primary-side control and feedback, eliminating the need for optocouplers or secondary-side sensing components.
- Improved efficiency by utilizing otherwise dissipated energy for output power regulation.
- Use of a smaller primary-side capacitor, which can be a ceramic capacitor, reducing overall component size and improving reliability.
- Simplified control strategy, with alternating operation of the two switches (first switch and second switch) and straightforward estimation of output parameters.
- Particularly suited for LED applications, where constant current regulation improves LED lifespan and performance.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations, and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A flyback power converter (10), comprising:
a transformer (11) having a primary winding (11a) connected to an input supply (12) and a secondary winding (11b) for supplying power to a load (20),
a first switch (13) arranged in series with the primary winding (11a) and configured to conduct current through the primary winding (11a) during an on-time and interrupt current flow during an off-time,
an output circuit (14) coupled to the secondary winding (11b) for powering the load (20); and
an auxiliary circuit (15) configured to be active during an off-time of the first switch (13), wherein:
the auxiliary circuit (15) is configured to absorb energy from the transformer (11)in a first phase of the off-time of the first switch (13),; and
the auxiliary circuit (15) is configured to deliver at least part of the absorbed energy to the output circuit (14) in a second phase of the off-time of the first switch (13), following said first phase,.

2. The flyback power converter (10) of claim 1, wherein the auxiliary circuit (15) is galvanically isolated from the output circuit (14) and is referenced to a primary-side ground potential.

3. The flyback power converter (10) of claim 1 or 2, wherein the auxiliary circuit (15) comprises:
an auxiliary winding (16) coupled to the primary winding (11a) of the transformer (11);
an energy storage component (17) connected to the auxiliary winding (16), configured to receive energy from the auxiliary winding (16) and discharge the received energy into the output circuit (14); and
a second switch (18) arranged in series with the auxiliary winding (16),
the second switch (18) being configured to conduct selectively during the off-time of the first switch (13).

4. The flyback power converter (10) of claim 3, wherein the energy storage component (17) is a buffer capacitor, optionally a ceramic capacitor.

5. The flyback power converter (10) of claim 3 or 4, further comprising a control circuit (19) arranged on the primary side and configured to drive the first switch (13) and the second switch (18) in an alternating manner.

6. The flyback power converter (10) of claim 5, wherein the control circuit (19) is configured to:
sense a first current through the first switch (13) and a second current through the second switch (18); and
estimate an output current of the output circuit (14) based on sensed first current and second current.

7. The flyback power converter (10) of claim 5 or 6, wherein the control circuit (19) is configured to:
sense a voltage across the energy storage component (17) in the auxiliary circuit (15);
estimate an output voltage of the output circuit (14) based on the sensed voltage.

8. A system (1) comprising:
a flyback power converter (10) according to any of the preceding claims, and
an LED-based load (20) supplied directly or by means of a further converter stage of the system, by said power converter (10).

9. A method (700) for operating a flyback power converter (10), preferably according to any of claims 1 to 7, the method (700) comprising:
conducting (701) current through a primary winding (11a) of a transformer (11) by turning on a first switch (13), thereby storing energy in the transformer;
interrupting (702) the current through the primary winding (11a) by turning off the first switch (13), thereby initiating an off-time and inducing energy transfer from the transformer (11) to an output circuit (14);
activating (703) an auxiliary circuit (15) during the off-time of the first switch (13), wherein during a first phase of the off-time, the auxiliary circuit (15) absorbs energy from the transformer and stores at least a portion of the absorbed energy, and during a second phase of the off-time, the auxiliary circuit (15) transfers at least part of the stored energy from the auxiliary circuit (15) to the output circuit (14); and
repeating (704) steps (701) to (703) in a switching cycle to regulate power delivery to the load (20). <

10. An integrated circuitry, such as an ASIC or microcontroller, arranged to support or implement the method of claim 10.

## Amended claims

### Amended claims in accordance with Rule 137(2) EPC.

1. A flyback power converter (10), comprising:
a transformer (11) having a primary winding (11a) connected to an input supply (12) and a secondary winding (11b) for supplying power to a load (20),
a first switch (13) arranged in series with the primary winding (11a) and configured to conduct current through the primary winding (11a) during an on-time and interrupt current flow during an off-time,
an output circuit (14) coupled to the secondary winding (11b) for powering the load (20); and
an auxiliary circuit (15) configured to be active during an off-time of the first switch (13), wherein:
the auxiliary circuit (15) is configured to absorb energy from the transformer (11)in a first phase of the off-time of the first switch (13); and
**characterized in that** the auxiliary circuit (15) is configured to deliver at least part of the absorbed energy to the output circuit (14) in a second phase of the off-time of the first switch (13), following said first phase.

2. The flyback power converter (10) of claim 1, wherein the auxiliary circuit (15) is galvanically isolated from the output circuit (14) and is referenced to a primary-side ground potential.

3. The flyback power converter (10) of claim 1 or 2, wherein the auxiliary circuit (15) comprises:
an auxiliary winding (16) coupled to the primary winding (11a) of the transformer (11);
an energy storage component (17) connected to the auxiliary winding (16), configured to receive energy from the auxiliary winding (16) and discharge the received energy into the output circuit (14); and
a second switch (18) arranged in series with the auxiliary winding (16),
the second switch (18) being configured to conduct selectively during the off-time of the first switch (13).

4. The flyback power converter (10) of claim 3, wherein the energy storage component (17) is a buffer capacitor, optionally a ceramic capacitor.

5. The flyback power converter (10) of claim 3 or 4, further comprising a control circuit (19) arranged on the primary side and configured to drive the first switch (13) and the second switch (18) in an alternating manner.

6. The flyback power converter (10) of claim 5, wherein the control circuit (19) is configured to:
sense a first current through the first switch (13) and a second current through the second switch (18); and
estimate an output current of the output circuit (14) based on sensed first current and second current.

7. The flyback power converter (10) of claim 5 or 6, wherein the control circuit (19) is configured to:
sense a voltage across the energy storage component (17) in the auxiliary circuit (15);
estimate an output voltage of the output circuit (14) based on the sensed voltage.

8. A system (1) comprising:
a flyback power converter (10) according to any of the preceding claims, and
an LED-based load (20) supplied directly or by means of a further converter stage of the system, by said power converter (10).

9. A method (700) for operating a flyback power converter (10), preferably according to any of claims 1 to 7, the method (700) comprising:
conducting (701) current through a primary winding (11a) of a transformer (11) by turning on a first switch (13), thereby storing energy in the transformer;
interrupting (702) the current through the primary winding (11a) by turning off the first switch (13), thereby initiating an off-time and inducing energy transfer from the transformer (11) to an output circuit (14);
activating (703) an auxiliary circuit (15) during the off-time of the first switch (13), wherein during a first phase of the off-time, the auxiliary circuit (15) absorbs energy from the transformer and stores at least a portion of the absorbed energy, and
**characterized in that** during a second phase of the off-time, the auxiliary circuit (15) transfers at least part of the stored energy from the auxiliary circuit (15) to the output circuit (14); and
repeating (704) steps (701) to (703) in a switching cycle to regulate power delivery to the load (20).

10. An integrated circuitry, such as an ASIC or microcontroller, arranged to support or implement the method of claim 9.
